# EUROPEAN PATENT SPECIFICATION

(11) **EP 2 444 692 B1**
(45) Date of publication and mention of the grant of the patent: **26.03.2014**
(21) Application number: 11186133.2
(22) Date of filing: 21.10.2011
(51) Int. Cl.: F16G 11/12, B63B 25/00, F16B 7/06

(54) **A locking mechanism**
Sperrmechanismus
Mécanisme de verrouillage

(30) Priority: 21.10.2010 CN 201020570650 U
(43) Date of publication of application: 25.04.2012
(73) Proprietor: Kunshan Lucky Sea Industrial Co., Ltd., 215331 Jiangsu Kunshan City (CN)
(72) Inventor: Zhu, Shan Tao, 215331 Kunshan City (CN); Liu, Xian Xing, 215331 Kunshan City (CN)
(74) Representative: Rooney, John-Paul

(56) References cited:
- EP-B1- 1 534 584
- DE-A1- 10 056 341
- DE-U1- 20 106 090
- SU-A1- 448 323

## Description

### FIELD OF THE INVENTION

The invention belongs to the field of locking devices, for example DE 20106090 U or SU 448 323. In particular, it relates to a locking mechanism.

### BACKGROUND OF THE INVENTION

It is requested that screws cannot be loosened during use. Thus it requires the need for a locking mechanism, which shall be simply structured, easy to operate, easy to manufacture, and reliable to perform.

### SUMMARY OF THE INVENTION

The technical problem to be solved by the invention is to provide a locking mechanism which addresses problems of the convenience and reliability in screw-locking operation in the existing technical field.

According to one aspect, the invention is a locking mechanism according to claim 1.

An example of a mechanism which fixes the upper and lower parts of the restricting shaft is a bolt placed in the lower hole of the restricting shaft and an opening on the cover corresponding to the bolt. The bolt reaches out through this opening. When the bolt is placed in the opening on the cover, the gear shaft engages with the restricting shaft. To disengage the gear shaft from the restricting shaft, the bolt is lifted out of the opening and rests on a flat surface of the cover.

In the embodiment according to claim 1, the mechanism which fixes the upper and lower parts of the restricting shaft is a notch in the lower part of the restricting shaft. The cover has an inwardly protruding part on the lower end. The inwardly protruding part is embedded in the notch. One side of the top part of the notch has a slot. When the protruding part of the cover is embedded in the notch, the gear shaft engages with the restricting shaft. To disengage the gear shaft from the restricting shaft, the protruding part is moved into the slot of the restricting shaft.

The linking pieces may consist of a screw and a nut. The screw goes through a hole at the smooth end of the gear shaft. Its bottom is fixed to the gear shaft by the nut.

A washer may surround the gear shaft between the screw and the cover.

The principle of the invention is the use of a wedge-shaped structure on the restricting shaft. When the locking mechanism rotates in the locking direction, the teeth squeeze the bevelled side of the gear shaft, causing the downward movement of the restricting shaft. When the gear shaft is over the limit and continues to rotate, the restricting shaft is forced into the groove between two teeth under the action of the spring, forming engagement. In the locking process, this movement is repeated.

When the locking mechanism rotates back in the unlocking direction, as the contacting surface between the tooth and the shaft is vertical, they will not produce relative movement between each other and cannot rotate back in the unlocking direction.

The invention has the advantages of simple structure, convenient operation, and high reliability.

### BRIEF DESCRIPTION OF THE DRAWINGS

Embodiments of the invention will now be described with reference to the accompanying drawings, in which:
Figure 1 is a front view of Example 1;
Figure 2 is a sectional view of Figure 1 across the line A-A;
Figure 3 is a diagram of the Example 1 when in use;
Figure 4 is a diagram of the invention in its unlocking state;
Figure 5 is a structural diagram of Example 2 when in use; and
Figure 6 is a structural diagram of Example 2 in its unlocking state.

### DETAILED DESCRIPTION OF EMBODIMENT(S)

Next is the further elaboration of the invention combined with specific examples. It should be understood that these examples are used to present the invention but not used to limit the scope of the invention. It should also be understood that after reading the description of the invention,those skilled in the art can make various changes or modifications. These equivalent forms also fall in the scope of claims accompanying the description.

### Example 1

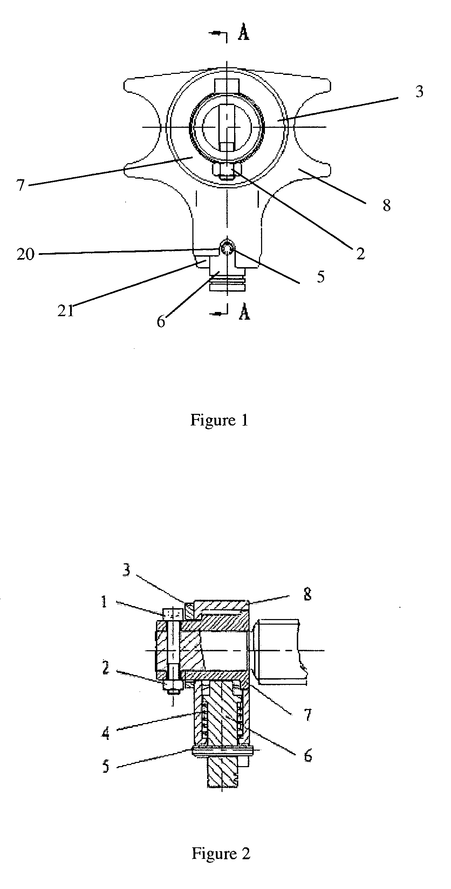

As shown in Figure 1 and Figure 2, a locking mechanism, includes screw 1, nut 2, washer 3, spring 4, bolt 5, restricting shaft 6, gear shaft 7 and cover 8. The lower part of the gear shaft 7 is restricting shaft 6 which has spring 4 and whose upper and lower parts are fixed by bolt 5. The top of the restricting shaft 6 is a wedge-shaped structure which couples with the groove between the two teeth of the gear shaft 7.

One side of the wedge structure is a beveled cone; the other side is a ladder structure of right angles. The cover 8 is wrapped in the exterior of the gear shaft 7 and the restricting shaft 6.

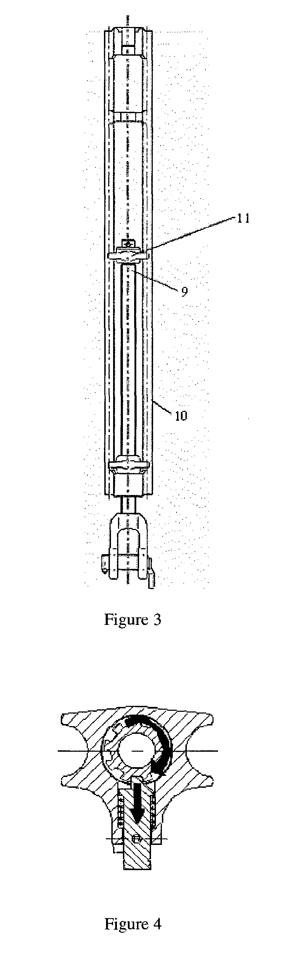

As shown in Figure 3 and Figure 4 (11 in Figure 3 refers to the invention), when using, take apart screw 1, nut 2 of the locking mechanism, screw them onto the top end of shank 9 of turnbuckle 10, fasten screw 1, nut 2, pull down restricting shaft 6 and rotate, and place bolt 5 on a flat surface. At this time restricting shaft 6 and gear shaft 7 separate. Rotate turnbuckle 10 and fasten it. When reaching the desired position, rotate restricting shaft 6 to couple with gear shaft 7 (as shown in Figure 4). At this time turnbuckle is tightly locked and cannot be unlocked. When unlocking, pull down restricting shaft 6 and rotate, place bolt 5 on a flat surface. At this time, restricting shaft 6 and gear shaft 7 separate so that the turnbuckle 10 can unlock.

When the restricting shaft 6 rotates 180 degrees during the installation process, the unlocking and opening can be achieved in reverse order.

### Example 2

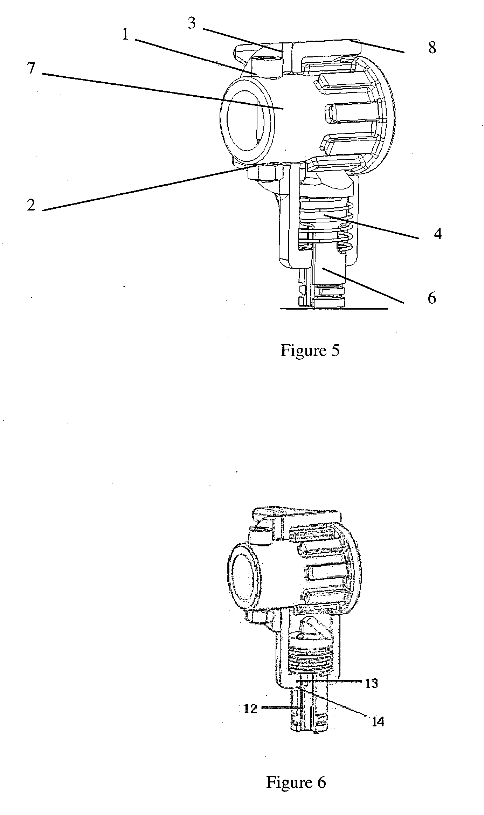

As shown in Figure 5, a locking mechanism, includes a screw 1, a nut 2, a washer 3, a spring 4, a restricting shaft 6, a gear shaft 7 and a cover 8. Below the gear shaft 7 is the restricting shaft 6 and the upper part of the restricting shaft 6 has the spring 4. The top of the restricting shaft 6 is a wedge-shaped structure which couples with the groove between the two teeth of the gear shaft 7. One side of the wedge structure is a bevelled cone; the other side is a ladder structure of right angels.

As shown in Figure 6, the mechanism for fixing the upper and lower parts of the restricting shaft 6 is the notch 12 in the lower part of the restricting shaft. The cover has an inwardly protruding part 13 which is embedded in the notch 12. One side of the top part of notch 12 has a slotted opening 14. When in use, the wedge-shaped structure in the upper part of restricting shaft is stuck in between the two teeth of the gear. At this time, it is in a locking state and the gear shaft 7 can turn in one direction (i.e. the locking direction) only. To unlock, pull down the restricting shaft 6, rotate it when its protruding part glides to the upper side of the notch 12 so that the protruding part is in the slot 14 at the upper part of notch 12. At this moment, the restricting shaft 6 separates from the gear shaft 7. The locking mechanism is in an open position and the gear shaft 7 can turn in both directions.

Although the invention has been described above with reference to one or more preferred embodiments, it will be appreciated that various changes or modifications may be made without departing from the scope of the invention as defined in the appended claims.

## Claims

1. A locking mechanism, including a spring (4), a restricting shaft (6), a gear shaft (7) and a cover (8), wherein the upper part of the cover (8) is a hollow flat chamber and the lower part has a hollow trunk; the gear shaft (7) includes one end with teeth and the other end being smooth, the end with teeth being in the upper hollow section of the cover (8), the smooth end stretching out to the outside of the cover (8), and the smooth end of the gear shaft (7) having holes which are equipped with linking pieces; the restricting shaft (6) below the gear shaft (7) is in the hollow trunk of the lower part of the cover (8), the top of the restricting shaft (6) being a wedge-shaped structure and the lower part thereof being cylindrical; the lower section adjacent to the wedge-shaped structure has a protrusion; the spring (4) sets in the restricting shaft (6) below the protrusion;. the said wedge-shaped structure fits into the groove between two teeth of the gear shaft (7); and the restricting shaft (6) and its external cover (8) form the mechanism which fixes the upper and lower parts of the restricting shaft (6) **characterized in that**: the mechanism which fixes the upper and lower parts of the fixed restricting shaft(6) is a notch (12) in the lower part of the restricting shaft (6) and an inwardly protruding part (13) on the lower end of the cover (8), the inwardly protruding part (13) being embedded in the notch (12) and one side of the top part of the notch (12) having a slot (14), to unlock said gear shaft, the restricting shaft (6) is pulled down and rotated when its protruding part glides to the upper side of the notch (12) so that the protruding part is in the slot (14) at the upper part of the notch (12).

2. A locking mechanism based on Claim 1, **characterized in that**: the linking parts consist of a screw (1) and a nut (2), the screw (1) going through a hole in the smooth end of the gear shaft (7) and the bottom of the screw being fixed to the gear shaft (7) by the nut (2).

3. A locking mechanism based on Claim 2, **characterized in that**: a washer (3) surrounds the gear shaft (7) between the screw (1) and the cover (8).

## Patentansprüche

1. Sperrmechanismus, umfassend eine Feder (4), eine Begrenzungswelle (6), eine Zahnradwelle (7) und eine Abdeckung (8), wobei der obere Teil der Abdeckung (8) eine hohle flache Kammer ist und der untere Teil einen hohlen Kasten aufweist; die Zahnradwelle (7) ein Ende mit Zähnen umfasst, wobei das anderer Ende glatt ist, das Ende mit Zähnen sich in dem oberen hohlen Teilstück der Abdeckung (8) befindet, das glatte Ende sich heraus zur Außenseite der Abdeckung (8) erstreckt, und das glatte Ende der Zahnradwelle (7) Löcher aufweist, die mit Verbindungsstücken ausgestattet sind; die Begrenzungswelle (6) unterhalb der Zahnradwelle (7) sich in dem hohlen Kasten des unteren Teils der Abdeckung (8) befindet, das Oberteil der Begrenzungswelle (6) eine keilförmige Struktur ist und ihr unterer Teil zylindrisch ist; das untere Teilstück benachbart zu der keilförmigen Struktur einen Vorsprung aufweist; die Feder (4) in der Begrenzungswelle (6) unterhalb des Vorsprungs sitzt; die keilförmige Struktur in die Nut wischen zwei Zähnen der Zahnradwelle (7) passt; und die Begrenzungswelle (6) und ihre äußere Abdeckung (8) den Mechanismus bilden, der die oberen und unteren Teile der Begrenzungswelle (6) befestigt, **dadurch gekennzeichnet, dass**: der Mechanismus, der die oberen und unteren Teile der festen Begrenzungswelle (6) befestigt, eine Kerbe (12) in dem unteren Teil der Begrenzungswelle (6) und ein nach innen vorspringender Teil (13) an dem unteren Ende der Abdeckung (8) ist; der nach innen vorspringende Teil (13) in der Kerbe (12) eingebettet ist, und eine Seite des oberen Teils der Kerbe (12) einen Schlitz (14) aufweist, zum Entsperren der Zahnradwelle die Begrenzungswelle (6) nach unten gezogen und gedreht wird, wenn ihr vorspringender Teil zu der oberen Seite der Kerbe (12) gleitet, so dass der vorspringende Teil sich in dem Schlitz (14) an dem oberen Teil der Kerbe (12) befindet.

2. Sperrmechanismus nach Anspruch 1, **dadurch gekennzeichnet, dass**: die Verbindungsteile aus einer Schraube (1) und einer Mutter (2) bestehen, wobei die Schraube (1) durch ein Loch in dem glatten Ende der Zahnradwelle (7) verläuft, und das Unterteil der Schraube an der Zahnradwelle (7) durch die Mutter (2) befestigt ist.

3. Sperrmechanismus nach Anspruch 2, **dadurch gekennzeichnet, dass**: eine Scheibe (3) die Zahnradwelle (7) zwischen der Schraube (1) und der Abdeckung (8) umgibt.

## Revendications

1. Dispositif de verrouillage, comportant un ressort (4), un arbre limiteur (6), un arbre formant pignon (7) et un carter (8), dans lequel la partie supérieure du carter (8) est une chambre plate creuse et la partie inférieure comporte un tronc creux ; l'arbre formant pignon (7) comporte une extrémité avec des dents, l'autre extrémité étant lisse, l'extrémité avec des dents étant dans la section creuse supérieure du carter (8), l'extrémité lisse s'étendant vers l'extérieur du carter (8), et l'extrémité lisse de l'arbre formant pignon (7) comportant des orifices qui sont équipés de pièces de liaison ; l'arbre limiteur (6) au-dessous de l'arbre formant pignon (7) est dans le tronc creux de la partie inférieure du carter (8), la partie supérieure de l'arbre limiteur (6) étant une structure en forme de coin et la partie inférieure de celui-ci étant cylindrique ; la section inférieure adjacente à la structure en forme de coin comporte une saillie ; le ressort (4) est placé sur l'arbre limiteur (6) au-dessous de la saillie ; ladite structure en forme de coin s'assemble dans la cannelure entre deux dents de l'arbre formant pignon (7) ; et l'arbre limiteur (6) et son carter externe (8) forment le mécanisme qui maintient les parties supérieure et inférieure de l'arbre limiteur (6), **caractérisé en ce que** : le mécanisme qui maintient les parties supérieure et inférieure de l'arbre limiteur (6) fixes est une rainure (12) sur la partie inférieure de l'arbre limiteur (6) et une partie s'étendant vers l'intérieur (13) sur l'extrémité inférieure du carter (8), la partie s'étendant vers l'intérieur (13) étant encastrée dans la rainure (12) et un côté de la partie supérieure de la rainure (12) comportant une fente (14), pour déverrouiller ledit arbre formant pignon, l'arbre limiteur (6) est abaissé et tourné lorsque sa partie en saillie glisse vers le côté supérieur de la rainure (12) de sorte que la partie en saillie se trouve dans la fente (14) au niveau de la partie supérieure de la rainure (12).

2. Dispositif de verrouillage selon la revendication 1, **caractérisé en ce que** les parties de liaison consistent en une vis (1) et un écrou (2), la vis (1) passant à travers un orifice sur l'extrémité lisse de l'arbre formant pignon (7) et la partie inférieure de la vis étant fixée sur l'arbre formant pignon (7) par l'écrou (2).

3. Dispositif de verrouillage selon la revendication 2, **caractérisé en ce qu'**une rondelle (3) entoure l'arbre formant pignon (7) entre la vis (1) et le carter (8).
